# EUROPÄISCHE PATENTANMELDUNG

(11) **EP 3 671 595 A1**
(43) Veröffentlichungstag der Anmeldung: **24.06.2020**
(21) Anmeldenummer: 19216403.6
(22) Anmeldetag: 16.12.2019
(51) Int. Cl.: G06Q 10/08, G08C 17/02, H04M 1/725, H04Q 9/02, H04W 4/02

(54) **VORRICHTUNG ZUM BEFESTIGEN AN EINER LADUNG, FUNKSENDER ZUR AUSGABE EINES VORGEGEBENEN SIGNALS ZUM EMPFANG DURCH EINE VORRICHTUNG ZUR BEFESTIGUNG AN EINER LADUNG UND VERFAHREN ZUM BETREIBEN EINER VORRICHTUNG ZUM BEFESTIGEN AN EINER LADUNG**

(30) Priorität: 18.12.2018 DE 102018222167
(71) Anmelder: Robert Bosch GmbH, 70442 Stuttgart (DE)
(72) Erfinder: Bredenstein, Ludger, 71691 Freiberg (DE)

(57) **Zusammenfassung**

Es wird eine Vorrichtung (1) zum Befestigen an einer Ladung (2) vorgeschlagen, die eine Funkschnittstelle (21) zum Aussenden von Messwerten der Vorrichtung (1) aufweist. Dabei ist eine Flugerkennung (26) vorgesehen, die Messwerte auswertet, wobei die Aussendung von Funksignalen (14) nur erfolgt, wenn durch die Flugerkennung (26) ein aktueller Flugtransport der Ladung (2) ausgeschlossen ist. Die Flugerkennung (26) schließt nur dann einen aktuellen Flugtransport aus, wenn zwei unabhängige Messwerte einen Flugtransport ausschließen, wobei einer der möglichen Messwerte aus dem Empfangen oder Nicht-Empfangen eines vorgegebenen Funksignals (4) besteht. Weiterhin wird ein entsprechender Sender (3) und ein entsprechendes Verfahren vorgeschlagen.

## Beschreibung

Die Erfindung geht aus von einer Vorrichtung, einem Funksender und einem Verfahren nach der Gattung der unabhängigen Patentansprüche. Es sind bereits Vorrichtungen zum Befestigen an einer Ladung bekannt, die mittels einer Funkschnittstelle Messwerte der Vorrichtung aussenden. Wenn eine derartige Vorrichtung an einer Ladung befestigt wird, die mit einem Flugzeug transportiert wird, so muss die Aussendung von Signalen durch die Funkschnittstelle zumindest während des Flugtransports unterbunden werden. Die Vorrichtung muss daher entweder ausschaltbar sein oder aber eine automatische Flugerkennung aufweisen, die einen aktuellen Flugtransport der Ladung ausschließen kann.

### Vorteile der Erfindung

Die erfindungsgemäße Vorrichtung und das Verfahren bzw. der Funksender haben demgegenüber den Vorteil, dass eine besonders sichere und zuverlässige Erkennung eines Flugtransports erfolgt. Weiterhin kann trotzdem sichergestellt werden, dass ausreichend sicher erkannt wird, wenn kein Flugtransport der Ladung erfolgt und somit eine Aussendung von Funksignalen durch die Funkschnittstelle möglich ist. Es können so Messwerte, die durch die Vorrichtung ermittelt wurden, insbesondere eine Position der Vorrichtung mittels der Funkschnittstelle übertragen werden. Es wird eine zuverlässige Überwachung der Ladung durch Auswertung der Messwerte der Vorrichtung insbesondere der Position der Vorrichtung ermöglicht. Durch die Einbeziehung eines vorgegebenen Funksignals als Messwert können Bereiche definiert werden, in denen eine Benutzung der Funkschnittstelle, d.h. eine Übermittlung der Messwerte der Vorrichtung erlaubt ist. Es wird so die Erfassung der Messwerte einer Ladung verbessert.

Weitere Vorteile und Verbesserungen ergeben sich durch die Merkmale der abhängigen Patentansprüche. Durch die Verwendung einer Geschwindigkeitsinformation, einer Beschleunigung, eines Lichteinfalls oder eines Luftdruckes kann im Zusammenwirken mit dem Empfangen oder Nichtempfangen eines vorgegebenen Funksignals ein zuverlässiger Ausschluss eines Flugtransports der Ladung erfolgen. Insgesamt sollen dazu mindestens drei Messwerte, von denen zwei einen Flugtransport ausschließen, verwendet werden. Besonders einfach werden dabei insbesondere die Geschwindigkeit und die Beschleunigung der Vorrichtung verwendet, da sich diese Messwerte als besonders aussagekräftig zum Ausschließen eines Flugtransports herausgestellt haben. Der Messwert der Geschwindigkeit soll dabei einen Flugtransport nicht ausschließen, wenn die Geschwindigkeit über einen Grenzwert ist oder kein Satellitenempfang vorliegt. Es wird so eine besonders große Sicherheit durch die Verwendung dieses Messwerts erreicht, da auch in Situationen, in denen ein Satellitensignal nicht empfangen werden kann und somit keine Geschwindigkeitsberechnung erfolgen kann, ein Flugtransport nicht ausgeschlossen wird. Der Messwert der Geschwindigkeit schließt ein Flugtransport nun dann aus, wenn das Satellitensignal empfangen wird und die daraus berechnete Geschwindigkeit unter einem Grenzwert liegt. Ebenso fließt der Messwert der Beschleunigung einen Flugtransport nur dann aus, wenn die Beschleunigung unter einem Grenzwert liegt. Als weiterer Messwert kann auch das Empfangen oder nicht Empfangen eines weiteren vorgegebenen Funksignals Verwendung finden, wenn sich das weitere vorgegebene Funksignal und das vorgegebene Funksignal hinsichtlich Frequenzmodulation oder Codierung voneinander unterscheiden. Durch diese Unterscheidung kann sichergestellt werden, dass es nicht zu einer Störung beispielsweise einer elektromagnetischen Störung kommt, die zufällig beide unterschiedlichen Funksignale, sowohl das vorgegebene Funksignal wie auch das weitere vorgegebene Funksignal, zufällig nachbildet. Durch die Unterschiedlichkeit dieser Funksignale ist eine zufällige elektromagnetische Störung, die fehlerhaft als beide unterschiedliche Funksignale interpretiert wird, ausgeschlossen. Es können alle üblichen Standards für Funksignale, wie beispielsweise Bluetooth, WLAN, ZigBee oder beliebige andere Funksignale Verwendung finden. Der bevorzugte Messwert der von der Vorrichtung über die Funkschnittstelle übertragen wird, ist die Position der Vorrichtung.

### Zeichnungen

Ausführungsbeispiele der Erfindung werden in den Zeichnungen dargestellt und in der nachfolgenden Beschreibung näher erläutert.
Es zeigen:
- Figur 1: eine Vorrichtung, befestigt an einer Ladung und verschiedene ausgetauschte Funksignale und
- Figur 2: eine Detailansicht der erfindungsgemäßen Vorrichtung.

### Beschreibung

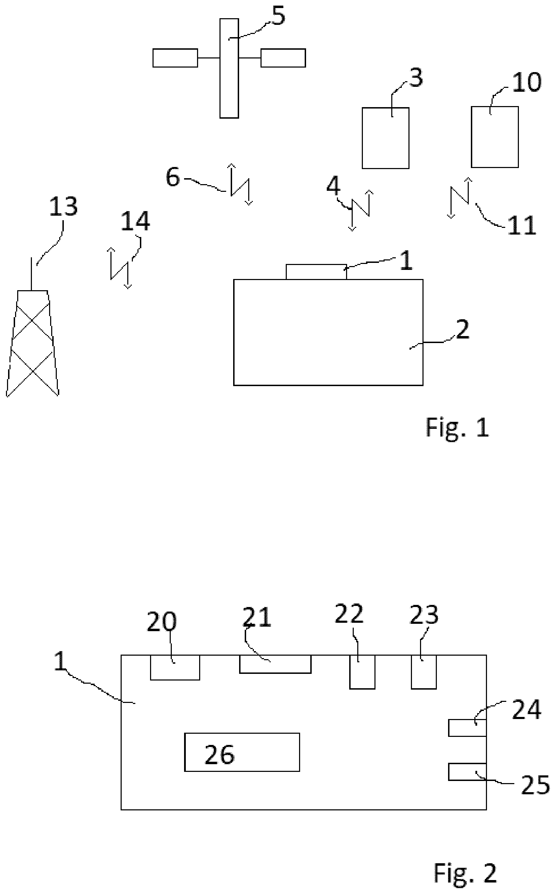

In der Figur 1 wird schematisch eine Vorrichtung 1 zum Befestigen an einer Ladung 2 gezeigt. Im Bild 1 ist die Vorrichtung 1 an der Ladung 2 befestigt. Bei der Vorrichtung 1 handelt es sich insbesondere um einen sogenannten Tracker, d.h. eine Vorrichtung, die zur Verfolgung der jeweiligen Position der Ladung ausgebildet ist. Alternativ kann die Vorrichtung 1 auch einfach dazu dienen, Messwerte zu übertragen, beispielsweise Erschütterungswerte, um sicherzustellen, dass es nicht zu einer Beschädigung der Ware gekommen ist. Die Vorrichtung 1 erfasst somit Messwerte, wobei als Messwert auch die Position der Vorrichtung 1 zu verstehen ist.

Zur Erfassung der Position empfängt die Vorrichtung 1 Funksignale 6 von mehreren Satelliten 5 (in der Figur 5 wird zur Vereinfachung nur ein Satellit 5 dargestellt) und errechnet aus den unterschiedlichen Laufzeiten die Position der Vorrichtung 1. Durch eine zeitliche Betrachtung der Positionen kann die Vorrichtung 1 auch die Geschwindigkeit, mit dem die Vorrichtung 1 bzw. die Ladung 2 transportiert wird, verfolgen. Weiterhin weist die Vorrichtung 1 noch eine Vielzahl von Sensoren auf, die beispielsweise Beschleunigungswerte der Vorrichtung 1 bzw. Ladung 2, eine Temperatur in der Umgebung der Vorrichtung 1 bzw. der Ladung 2, einen umgebenden Luftdruck um die Vorrichtung 1 bzw. die Ladung 2 oder einen Lichteinfall auf die Vorrichtung 1 messen. All diese Daten können von der Vorrichtung 1 entsprechend über eine Funkschnittstelle ausgesendet werden.

Die einzelnen Details der Vorrichtung 1 sind in der Figur 2 dargestellt. Die Figur 2 zeigt dazu die Vorrichtung 1 mit einer Satellitensignalempfangseinheit 20, insbesondere zum Empfangen von Satellitensignalen des GPS-Systems oder des Glonass-Systems. Weiterhin weist die Vorrichtung 1 einen Funksender 21 auf, durch den Messwerte der Vorrichtung 1 ausgesendet werden können. Der Funksender 21 stellt somit eine Funkschnittstelle dar. Weiterhin zeigt die Figur 2 noch einen Beschleunigungssensor 24, und einen Luftdrucksensor 25 als Beispiele für weitere Sensoren. Weitere Sensoren werden aus Gründen der Übersichtlichkeit in der Figur 2 nicht dargestellt. Durch den GPS-Empfänger 20 kann die Vorrichtung 1 die Signale von mehreren Satelliten 5 empfangen und daraus die aktuelle Position der Vorrichtung 1 bestimmen. Durch den Funksender 21 kann die Vorrichtung 1 Messwerte, beispielsweise an ein Mobilfunksystem wie GSM oder LTE, welches exemplarisch in der Figur 1 durch den Funkmast 13 dargestellt ist, mittels Funksignalen 14 senden.

Wenn die Ladung 2 mittels eines Flugzeugs transportiert wird, sollen keine Signale durch den Funksender 21 ausgesendet werden, da es beim Aussenden eines derartigen Funksignals 14 zu einer Störung der Funkkommunikation des Flugzeugs kommen kann. Es wird daher gefordert, dass eine derartige Vorrichtung zum Befestigen an einer Ladung 2 mit einer Funkschnittstelle, eine automatisierte Erkennung eines Flugtransports der Ladung enthalten soll und zuverlässig die Aussendung derartiger Funksignale durch den Funksender 21 auszuschalten. Es ist daher eine Flugerkennung 26 vorgesehen, die beispielsweise in dem logischen Schaltkreis 26, wie er in der Figur 2 gezeigt wird, realisiert ist. Bei einem derartigen logischen Schaltkreis 26 handelt es sich insbesondere um einen entsprechenden programmierten Mikrokontroller, der zur Auswertung aller Signale in der Vorrichtung 1 ausgebildet ist. Alternativ können jedoch auch festverdrahtete oder fest programmierte Logikschaltkreise Verwendung finden.

Durch Auswertung von Signalen der verschiedenen Sensoren 24, 25 oder der verarbeiteten Positionssignale des GPS-Empfängers 20 kann eine Flugerkennung erfolgen. Beispielsweise kann ein Transport der Ladung in einem Flugzeug sicher erkannt werden, wenn die Geschwindigkeit der Vorrichtung 1 über einem Grenzwert liegt. Umgekehrt kann aufgrund des Messwertes der Geschwindigkeit der Vorrichtung 1 ein Transport in einem Flugzeug ausgeschlossen werden, wenn der Messwert der Geschwindigkeit unter einem Grenzwert ist. Ebenso kann ein Flugtransport ausgeschlossen werden, wenn die Vorrichtung 1 nur sehr geringen Beschleunigungen ausgesetzt ist. Da es auch in einer Druckkabine eines Flugzeugs, während Start und Landung zu Druckänderungen kommt, kann ein Flugtransport auch durch Auswertung der Signale des Luftdrucksensors erfasst oder ausgeschlossen werden. Wesentlich ist, dass aufgrund der Sicherheitsbedenken nur dann ein Flugtransport ausgeschlossen werden kann, wenn mindestens zwei Messwerte von unabhängigen Sensoren dies ausschließen. Dabei muss es sich um voneinander unabhängige Sensoren oder Messwerte handeln, um sicherzustellen, dass nicht der Ausfall oder eine Störung eines einzelnen Sensors, einzelnen Messwerts oder eines einzelnen GPS-Empfängers fehlerhaft zum Ausschluss eines Flugtransports führt.

Besonders vorteilhaft ist dabei insbesondere die Verwendung der Position, da die meisten Vorrichtungen, die an einer Ladung befestigt werden, Satellitensignale durch einen GPS-Empfänger 20 auswerten, und somit dieses Signal bei den meisten Vorrichtungen ohnehin vorhanden ist. Weiterhin ist auch die Erfassung von Beschleunigungen einer Ladung zur Abklärung von Transportschäden von besonderer Bedeutung, so dass die meisten Vorrichtungen 1 zum Überwachen einer Ladung auch einen derartigen Beschleunigungssensor 24 aufweisen. Um somit das Kriterium von zwei Messwerten, die unabhängig voneinander einen Flugtransport der Ladung 2 ausschließen zu erfüllen, könnte es somit ausreichend sein, die Geschwindigkeit aus den Satellitensignalen bzw. die Beschleunigung auszuwerten. Leider ist es so, dass in geschlossenen Gebäuden oder Transportfahrzeugen mit einer Metallhülle ein Empfang von Satellitensignalen oft unterbunden wird. Aus Sicherheitserwägungen ist es nicht möglich, bei einen Nichtempfang von Satellitensignalen davon auszugehen, dass die Ladung nicht in einem Flugzeug transportiert wird, da auch in einem Flugzeug häufig Satellitensignale zu Positionsbestimmungen nicht empfangen werden. Bei einer Verwendung der Geschwindigkeit, die aus einem Satellitensignal ermittelt wurde, kann es daher häufig vorkommen, dass eine Aussendung von Messwerten über den Funksender 21 unterbleibt, da nicht zuverlässig ausgeschlossen werden kann, dass die Ladung in einem Flugzeug transportiert wird.

Erfindungsgemäß wird daher die Verwendung eines weiteren Messwerts vorgestellt, der in der Figur 1 dargestellt wird. Dazu wird in der Nähe der Ladung 2 ein Funksender 3 vorgesehen, der ein Funksignal 4 aussendet. Dieses Funksignal 4 wird von dem in der Figur 2 dargestellten Funkempfänger 22 empfangen und es kann so sichergestellt werden, dass sich die Ladung 2 bzw. die darin befestigte Vorrichtung 1 in Reichweite des Funkempfängers 3 befinden. Der Funkempfänger 3 ist dabei so ausgebildet, dass er nur eine kurze Reichweite hat und beispielsweise nur eine Fabrikhalle oder ein Zwischenlagerbereich einer Spedition umfasst. In einem Flugzeug wäre ein derartiger Funksender 3 nicht vorgesehen, so dass die Vorrichtung 1 auch das Funksignal 4 nicht empfangen kann. Das Empfangen des Funksignals des Funksenders 3 zeigt somit an das kein Flugtransport vorliegt und ein Fehlen des Funksignals 4 zeigt an das eventuell ein Flugtransport stattfindet. Das Vorliegen oder Nichtvorliegen eines derartigen Funksignals 4 wird als weiterer Messwert für die Entscheidung, ob gerade ein Flugtransport der Vorrichtung 1 erfolgt oder nicht, verwendet.

Wenn beispielsweise die Flugerkennung als Messwerte die Geschwindigkeit der Vorrichtung, die Beschleunigung der Vorrichtung und das Empfangen oder Nichtempfangen des Funksignals 4 verwendet, so kann mittels einer zwei-vondrei-Auswahl ein Flugtransport der Vorrichtung 1 sicher ausgeschlossen werden, wenn zwei dieser Messwerte einen Flugtransport ausschließen. Wenn beispielsweise kein Satellitensignal empfangen wird, so kann aufgrund einer geringen Beschleunigung und aufgrund des Vorhandenseins des Funksignals 4 ein Flugzustand ausgeschlossen werden. Da dabei zwei Messwerte, nämlich Beschleunigung und Empfang oder Nichtempfang des Funksignals 4 verwendet werden, ist ausgeschlossen, dass durch eine Einzelstörung einer Komponente, beispielsweise des Beschleunigungssensors 24 oder des Funkempfängers 22 fehlerhaft ein Flugtransport ausgeschlossen wird. Obwohl die Satellitensignale empfangen werden kann trotzdem zuverlässig, mit einer Bestätigung durch zwei unabhängige Messwerte, ein Flugtransport der Vorrichtung 1 ausgeschlossen werden.

Alternativ sind natürlich auch andere Messwertkombinationen möglich, wobei immer das Empfangen oder Nicht-Empfangen des Funksignals 4 als Messwert verwendet wird. Alternativ kann beispielsweise die Geschwindigkeit der Vorrichtung 1, das Signal des Luftdrucksensors 25 und das Empfangen oder Nicht-Empfangen des Funksignals 4 Verwendung finden. Es kann dann jede Kombination von zwei Messwerten, die einen Flugtransport ausschließen, zum Ausschluss eines Flugtransports und somit zur Freigabe zum Betrieb des Funksensors 21 verwendet werden.

Alternativ kann jede Kombination der Geschwindigkeitsinformation, der Beschleunigung, des Lichteinfalls oder des Luftdrucks zusammen mit dem Empfangen oder Nicht-Empfangen des Funksignals 4 zum Ausschließen eines Flugtransports Verwendung finden. Wesentlich ist dabei, dass immer mindestens zwei Messwerte einen Flugtransport ausschließen. Es können auch mehr als drei Messwerte herangezogen werden, wobei immer dann ein Flugtransport ausgeschlossen werden kann, wenn zwei Messwerte unabhängig voneinander in einem Zustand anzeigen, der einen Flugtransport ausschließt.

In einer weiteren Variante der Erfindung kann auch noch ein weiterer Funksender 10, der ein ebenfalls ein Funksignal 11 mit nur einer geringen Reichweite aussendet, verwendet werden. Ein derartiges weiteres Funksignal 11 würde von dem Funkempfänger 23 der Figur 2 empfangen werden. In der Figur 2 ist somit ein Funkempfänger 22 zum Empfangen des Funksignals 4 und ein weiterer Funkempfänger 23 zum Empfang des Weiteren Funksignals 11 vorgesehen. Wesentlich ist hierbei, dass das Funksignal 4 und das weitere Funksignal 11 sich hinsichtlich der Frequenz, der Modulation oder der Codierung eindeutig voneinander unterscheiden, wobei dieser Unterschied stark genug ist, so dass nicht durch eine einzelne elektromagnetische Störung fehlerhaft, sowohl das Funksignal 4 wie auch das weitere Funksignal 11 nachgebildet werden kann. Dies kann beispielsweise dadurch sichergestellt werden, dass sich das Funksignal 4 und das weitere Funksignal 11 hinsichtlich der Frequenz oder der Art der Modulation unterscheiden. Beispielsweise kann das Funksignal 4 ein bestimmtes Codewort mit einer Amplitudenmodulation übertragen, während das Funksignal 11 anderes ein Codewort mit der Frequenz moduliert. Durch diese Unterscheidung des Funksignals 4 und des Weiteren Funksignals 11 kann dabei sichergestellt werden, dass es keine Störungen gibt, die fehlerhaft, sowohl als Funksignal 4, wie auch als weiteres Funksignal 11 interpretiert wird.

## Patentansprüche

1. Vorrichtung (1) zum Befestigen an einer Ladung (2), mit einer Funkschnittstelle (21) zum Aussenden von Messwerten der Vorrichtung (1), mit einer Flugerkennung (26) die Messwerte auswertet, wobei die Aussendung von Funksignalen (14) nur erfolgt wenn durch die Flugerkennung (26) ein aktueller Flugtransport der Ladung (2) ausgeschlossen ist, **dadurch gekennzeichnet, dass** die Flugerkennung (26) nur dann einen aktuellen Flugtransport ausschließt wenn zwei unabhängige Messwerte einen Flugtransport ausschließen, wobei einer der möglichen Messwerte aus dem Empfangen oder Nicht-Empfangen eines vorgegebenen Funksignals (4) besteht, wobei ein Flugtransport ausgeschlossen wird wenn das vorgegebene Funksignal (4) empfangen wird.

2. Vorrichtung nach Anspruch 1, **dadurch gekennzeichnet, dass** die Flugerkennung (26) einen Flugtransport der Ladung (2) ausschließt wenn mindesten zwei von mindestens drei Messwerten einen Flugtransport ausschließen, wobei neben dem Empfangen oder Nicht-Empfangen eines vorgegebenen Funksignals (4) als ein Messwert mindesten zwei der folgenden Messwerte verwendet werden: a) aus einem Satellitensignal ermittelten Geschwindigkeitsinformation, b) Beschleunigung, c) Lichteinfall d) Luftdruck.

3. Vorrichtung nach Anspruch 1, **dadurch gekennzeichnet, dass** die Flugerkennung (26) einen Flugtransport der Ladung (2) ausschließt wenn mindesten zwei von mindestens drei Messwerten einen Flugtransport ausschließen, wobei neben dem Empfangen oder Nicht-Empfangen eines vorgegebenen Funksignals (4) als ein Messwert, die aus einem Satellitensignal ermittelten Geschwindigkeitsinformation und eine Beschleunigung verwendet werden.

4. Vorrichtung nach Anspruch 3, **dadurch gekennzeichnet, dass** der Messwert der Geschwindigkeit einen Flugtransport nicht ausschließt, wenn die Geschwindigkeit über einem Grenzwert ist oder wenn kein Satellitensignal empfangen wird.

5. Vorrichtung nach Anspruch 3, **dadurch gekennzeichnet, dass** der Messwert der Geschwindigkeit einen Flugtransport ausschließt, wenn ein Satellitensignal empfangen wird und wenn die Geschwindigkeit unter einem Grenzwert ist, und dass der Messwert der Beschleunigung einen Flugtransport ausschließt, wenn die Beschleunigung für eine vorgegebene Zeitdauer unter einem Grenzwert ist.

6. Vorrichtung nach einem der vorhergehenden Ansprüche, **dadurch gekennzeichnet, dass** ein weiterer Messwert aus dem Empfangen oder Nicht-Empfangen eines weiteren vorgegebenen Funksignals (11) besteht, wobei sich das vorgegebene Funksignal und das weitere vorgegebene Funksignal hinsichtlich Frequenz, Modulation oder Codierung voneinander unterscheiden.

7. Vorrichtung nach einem der vorhergehenden Ansprüche, **dadurch gekennzeichnet, dass** das vorgegebene Funksignal (4) ein Bluetooth-Signal, WLAN-Signal, ein ZIGBEE-Signal oder ein sonstiges Funksignal ist.

8. Vorrichtung nach einem der vorhergehenden Ansprüche, **dadurch gekennzeichnet, dass** die Funkschnittstelle (21) zum Aussenden von Messwerten der Vorrichtung ein Positionssignal der Vorrichtung aussendet.

9. Funksender (3) zur Ausgabe eines vorgegebenen Signals zum Empfang durch eine Vorrichtung (1) nach den Ansprüche 1 bis 8.

10. Verfahren zum Betreiben einer Vorrichtung zum Befestigen an einer Ladung (2), mit einer Funkschnittstelle (21) zum Aussenden von Messwerten der Vorrichtung (1), wobei für eine Flugerkennung Messwerte auswertet werden, wobei die Aussendung von Funksignalen nur erfolgt, wenn durch die Flugerkennung (26) ein aktueller Flugtransport der Ladung ausgeschlossen wird, **dadurch gekennzeichnet, dass** die Flugerkennung nur dann einen aktuellen Flugtransport ausschließt wenn zwei unabhängige Messwerte einen Flugtransport ausschließen, wobei als einer der möglichen Messwerte das Empfangen oder Nicht-Empfangen eines vorgegebenen Funksignals (4) verwendet wird.
